(19) **Europäisches Patentamt / European Patent Office / Office européen des brevets**

(11) **EP 2 116 000 B1**

(12) **FASCICULE DE BREVET EUROPEEN**

(45) Date de publication et mention de la délivrance du brevet:
**17.05.2017 Bulletin 2017/20**

(21) Numéro de dépôt: **08762147.0**

(22) Date de dépôt: **25.02.2008**

(51) Int Cl.:
*H04L 9/30* (2006.01)     *H04L 9/32* (2006.01)
*H04L 29/06* (2006.01)     *H04L 12/22* (2006.01)

(86) Numéro de dépôt international:
**PCT/FR2008/050306**

(87) Numéro de publication internationale:
**WO 2008/113951 (25.09.2008 Gazette 2008/39)**

(54) **PROCÉÉE D'AUTHENTIFICATION UNIQUE D'UN UTILISATEUR AUPRÈS DE FOURNISSEURS DE SERVICE**

VERFAHREN ZUR AUTHENTIFIZIERUNG EINES BENUTZERS BEI DIENSTANBIETERN

METHOD FOR THE UNIQUE AUTHENTICATION OF A USER BY SERVICE PROVIDERS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.02.2007 FR 0753556**

(43) Date de publication de la demande:
**11.11.2009 Bulletin 2009/46**

(73) Titulaire: **Orange**
**75015 Paris (FR)**

(72) Inventeurs:
- **CANARD, Sébastien**
  **F-14000 Caen (FR)**
- **MALVILLE, Eric**
  **F-14400 Bayeux (FR)**
- **TRAORE, Jacques**
  **F-61100 Saint-Georges-Des-Groseillers (FR)**
- **GUILLOTEAU, Stéphane**
  **F-14430 Douville En Auge (FR)**

(56) Documents cités:
**US-A1- 2006 129 817    US-A1- 2006 155 993**

Printed by Jouve, 75001 PARIS (FR)

**Description**

La présente invention concerne un procédé d'authentification unique d'un utilisateur auprès d'au moins un fournisseur de service.

L'invention trouve une application particulièrement avantageuse dans le domaine des systèmes à authentification unique permettant à un utilisateur disposant de plusieurs identités auprès de plusieurs fournisseurs de service de fédérer ses identités, c'est-à-dire d'établir des liens logiques entre elles, et de bénéficier d'un service d'authentification unique SSO ("Single Sign-On" en anglais) pour accéder aux divers fournisseurs de service sans avoir à s'authentifier plusieurs fois.

Les mécanismes d'authentification classiques sur lesquels s'appuie la présente invention supposent que l'utilisateur a préalablement ouvert, auprès du fournisseur d'identité et respectivement auprès des fournisseurs de service, un compte identifié par une identité locale (*user@idp*, respectivement *user@sp*) en s'enregistrant sur la base de noms d'utilisateur respectifs, chacun de ces noms d'utilisateur pouvant être, selon la politique respective de l'IdP et de chaque fournisseur de service, soit le patronyme civil (certifié) de l'utilisateur soit un pseudonyme ; l'authentification auprès d'un IdP ou d'un SP consiste, pour l'utilisateur, à prouver qu'il est bien l'entité correspondant au nom d'utilisateur sur la base duquel il a ouvert un compte, et pour l'IdP ou le SP, à se référer, après vérification, à l'identité locale associée à cet utilisateur.

On connaît de l'état de la technique plusieurs systèmes offrant des fonctionnalités de SSO mettant en oeuvre un mécanisme consistant pour un utilisateur à s'authentifier une première fois auprès d'un fournisseur d'identité IdP ("Identity Provider" en anglais) et à accéder à des fournisseurs de service SP ("Service Provider" en anglais) sans devoir s'authentifier à nouveau.

Une première famille de solutions de SSO consiste à mettre en oeuvre une identité locale unique partagée par l'IdP et les SP. Des systèmes de SSO tels que Tivoli Access Manager d'IBM s'appuient sur ce type d'approche. Un inconvénient de ces systèmes est que l'IdP et les SP, qui disposent de l'identité unique de l'utilisateur, peuvent croiser leurs bases de données clients et donc porter atteinte à la vie privée des utilisateurs.

Une seconde famille de solutions de SSO consiste à mettre en oeuvre une fédération d'identités. L'utilisateur a des identités différentes chez l'IdP et les SP, et l'utilisateur établit des liens logiques entre elles de sorte que l'ensemble constitue in *fine* une identité logiquement unique mais physiquement distribuée. Des standards tels que Liberty de l'Alliance Liberty ou SAML de l'OASIS définissent des mécanismes de fédération d'identités et de SSO entre services s'appuyant sur cette fédération d'identités.

Les mécanismes spécifiés par l'Alliance Liberty ou l'OASIS permettent aux utilisateurs de fédérer leurs identités dynamiquement et en ligne. Ils permettent également à un SP de bénéficier d'une identité certifiée et délivrée par un IdP et donc d'affranchir l'utilisateur souhaitant consommer un service d'une nouvelle phase d'authentification.

Lorsqu'un utilisateur se connecte la première fois à un IdP pour s'authentifier auprès d'un SP, il se voit offrir la possibilité de fédérer son identité chez le SP avec son identité chez l'IdP. Contrairement à l'approche adoptée par des produits tels que Tivoli Access Manager d'IBM, les standards Liberty et SAML n'imposent pas aux IdP de fournir l'identité locale d'un utilisateur. Au contraire, les IdP peuvent, à la place, fournir une référence, appelée alias de fédération, associée à cet utilisateur, l'alias de fédération fourni par l'IdP étant différent pour chaque SP.

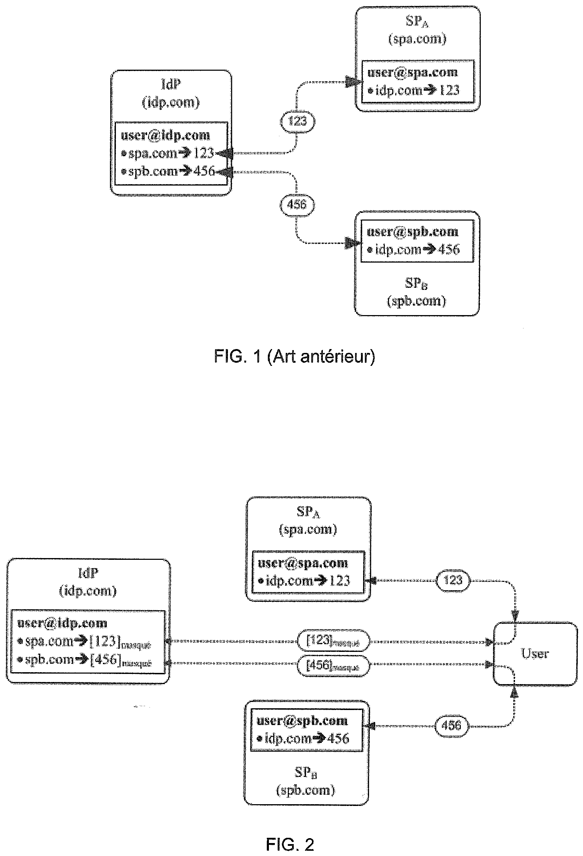

Dans une fédération d'identités, chaque entité, IdP et SP, crée pour chaque utilisateur une table de correspondance entre l'identité locale de l'utilisateur et les alias respectifs utilisés par chaque autre entité, comme l'illustre la figure 1, qui est un schéma représentant le modèle de fédération d'identités de Liberty et SAML.

Le procédé de fédération d'identités proposé par l'Alliance Liberty et l'OASIS est le suivant.

1. Un utilisateur ("User") accède à un service d'un fournisseur de service SP$_A$.

2. Le fournisseur de service SP$_A$ redirige l'utilisateur vers le fournisseur d'identité IdP, et fait transmettre à l'IdP par l'utilisateur une requête d'authentification signée par SP$_A$.

3. Le fournisseur d'identité IdP vérifie la signature de la requête d'authentification et authentifie l'utilisateur pour en déduire son identité locale (*user@idp*). Si le fournisseur d'identité IdP constate que l'identité locale (*user@idp*) de l'utilisateur n'est pas encore fédérée avec son identité chez le fournisseur de service SP$_A$ (*user@spa*), il génère un alias de fédération (*123*) et l'associe à l'identité locale de l'utilisateur (*user@idp*). Le fournisseur d'identité IdP génère une réponse d'authentification et la signe. Cette réponse d'authentification contient, non pas l'identité locale de l'utilisateur (*user@idp*), mais l'alias de fédération (*123*).

4. Le fournisseur d'identité IdP redirige l'utilisateur vers le fournisseur de service SP$_A$ en lui transmettant la réponse d'authentification.

5. Le fournisseur de service SP$_A$ reçoit la réponse d'authentification, vérifie la signature et en extrait l'alias de fédération (*123*). S'il constate qu'aucune identité locale ne correspond à cet alias de fédération, il propose à l'utilisateur de fédérer son identité locale avec son identité chez l'IdP. Le fournisseur de service SP$_A$ authentifie l'utilisateur, en déduit son identité locale (*user@spa*) et associe l'alias de fédération (*123*) à cette identité.

Ainsi, l'identité (*user@idp*) de l'utilisateur chez l'IdP est fédérée à son identité (*user@spa*) chez SP$_A$ par l'entremise de l'alias de fédération (*123*).

La même procédure s'applique pour fédérer l'identité (*user@idp*) de l'utilisateur chez l'IdP avec son identité (*user@spb*) chez un autre fournisseur de service SP$_B$ par l'entremise de l'alias de fédération (*456*).

L'authentification unique SSO est possible une fois que les identités d'un utilisateur chez le fournisseur d'identité et chaque fournisseur de service sont fédérées. Du point de vue de l'utilisateur, le SSO est réalisé quand l'utilisateur s'authentifie auprès d'un fournisseur d'identité et accède à plusieurs fournisseurs de service affiliés sans avoir à s'authentifier à nouveau. Cet avantage est obtenu après avoir fédéré les identités locales de l'utilisateur entre le fournisseur d'identité et les divers fournisseurs de service. Le protocole de SSO se distingue de celui de la fédération d'identités en ce que, à l'étape 5 ci-dessus, un fournisseur de service SP n'a pas besoin d'authentifier l'utilisateur dans la mesure où il peut déterminer automatiquement son identité *user@sp* à partir de l'alias de fédération.

Les standards de Liberty et de l'OASIS offrent donc un mécanisme de SSO garantissant un premier niveau de respect de la vie privée. En effet, dans le mécanisme de fédération d'identités qu'ils proposent, un fournisseur d'identité fournit un alias de fédération différent pour chaque fournisseur de service. Les fournisseurs de service ne peuvent donc pas utiliser ces alias pour croiser leurs bases de données clients.

En revanche, le fournisseur d'identité dispose, quant à lui, de tous les alias de fédération, et donc des informations nécessaires et suffisantes pour pouvoir recouper les bases clients. Cette opération de recoupement frauduleuse peut être réalisée à l'initiative du fournisseur d'identité lui-même ou d'un tiers ayant réussi à accéder aux données détenues par le fournisseur d'identité. Le document US 2006/155993, 13 juillet 2006 (13/07/2006), décrit un procédé de Single-Sign-On (SSO) dans un environnement qui comprend un utilisateur, un fournisseur de service et un fournisseur d'identité. L'authentification est réalisée par le fournisseur d'identité selon un modèle connu dans lequel l'identité d'un utilisateur auprès d'un fournisseur d'identité est fédérée à son identité chez le fournisseur de service par le biais d'un alias de fédération. La présente invention propose donc un procédé d'authentification unique d'un utilisateur auprès d'au moins un fournisseur de service, ledit procédé comprenant une phase préalable de fédération d'identités entre une identité dudit utilisateur auprès dudit fournisseur de service et une identité dudit utilisateur auprès d'un fournisseur d'identité. Ce procédé est remarquable en ce que ladite phase préalable de fédération d'identités comprend des étapes consistant :

- pour l'utilisateur, à générer un alias de l'utilisateur pour ce fournisseur de service et à transmettre audit fournisseur d'identité un alias masqué déduit dudit alias,
- pour le fournisseur d'identité, à associer ledit alias masqué pour ce fournisseur de service à l'identité de l'utilisateur auprès du fournisseur d'identité et à transmettre à l'utilisateur des éléments pour le calcul par l'utilisateur d'une signature d'un message contenant l'alias non masqué,
- pour l'utilisateur, à calculer ladite signature et à transmettre au fournisseur de service ledit message avec ladite signature, et
- pour le fournisseur de service, à vérifier ladite signature, à authentifier l'utilisateur et à associer ledit alias à l'identité de l'utilisateur auprès du fournisseur de service.

Grâce à l'invention, un utilisateur peut s'authentifier auprès d'au moins un fournisseur de service en fédérant ses identités auprès du fournisseur de service et auprès d'un fournisseur d'identité, sans que le fournisseur de service ou le fournisseur d'identité ne disposent d'informations leur permettant de croiser leurs bases de données clients.

Ainsi, le procédé de l'invention permet d'obtenir, comme les standards Liberty et SAML, qu'un même utilisateur soit connu sous des alias différents chez des fournisseurs de service différents -- ce qui empêche tout croisement de bases clients entre fournisseurs de service, mais qu'en outre l'alias sous lequel un utilisateur est connu chez le fournisseur d'identité pour un fournisseur de service donné (c'est à dire l'alias masqué) soit différent de l'alias correspondant chez le fournisseur de service, ce qui empêche toute possibilité de croisement de bases clients à l'initiative du fournisseur d'identité.

L'invention concerne donc également une table de fédération accessible à un fournisseur d'identité et associée à l'identité d'un utilisateur enregistré auprès dudit fournisseur d'identité, ladite table de fédération étant remarquable en ce qu'elle fait correspondre au moins un fournisseur de service avec un alias masqué respectif obtenu en masquant un alias associant ledit fournisseur d'identité à l'identité dudit utilisateur auprès dudit fournisseur de service.

En d'autres termes, la table de fédération est gérée, dans le cadre de l'invention, par l'utilisateur lui-même, alors que, dans le cadre des standards Liberty et SAML, elle est gérée par le fournisseur d'identité. L'invention permet donc de franchir un deuxième niveau de respect de la vie privée.

La phase préalable de fédération d'identités étant réalisée, l'utilisateur peut présenter une demande de service auprès d'un fournisseur de service en mettant en oeuvre, selon l'invention, une phase d'authentification comprenant des étapes consistant :

- pour l'utilisateur, à s'authentifier auprès du fournisseur d'identité pour ledit fournisseur de service,
- pour le fournisseur d'identité, à rechercher l'alias masqué pour ledit fournisseur de service associé à l'identité dudit utilisateur auprès dudit fournisseur d'identité, et à transmettre à l'utilisateur des éléments pour le calcul par l'utilisateur d'une signature d'un message contenant l'alias non masqué,
- pour l'utilisateur, à calculer ladite signature et à transmettre au fournisseur de service ledit message avec ladite signature, et
- pour le fournisseur de service, à vérifier ladite signature, à récupérer l'identité de l'utilisateur auprès du fournisseur de service à partir de l'alias, et à fournir le service demandé par l'utilisateur.

Selon des caractéristiques particulières, lesdits éléments fournis par le fournisseur d'identité représentent une signature partiellement aveugle d'un message contenant ledit alias masqué. Autrement dit, dans ce mode de réalisation, après signature aveugle de l'alias masqué par l'IdP et démasquage de l'alias par l'utilisateur, ce dernier obtient avantageusement la même signature que celle que l'IdP aurait pu produire sur la base de l'alias non masqué.

En particulier, ladite phase préalable de fédération d'identités peut comprendre les étapes consistant :

- pour l'utilisateur, à recevoir du fournisseur de service des données $M$ non confidentielles ainsi que, optionnellement, des données confidentielles $m^*$, puis à générer un alias $m$ de l'utilisateur pour ce fournisseur de service, et à transmettre audit fournisseur d'identité lesdites données $M$ non confidentielles, ledit alias $m$ sous forme masquée : $m_{masqué} = m \cdot g^s \bmod p$, où $g$ et $p$ sont des éléments publics et $s$ un élément choisi par l'utilisateur, ainsi que, le cas échéant, lesdites données confidentielles $m^*$ sous forme masquée,
- pour le fournisseur d'identité, à associer ledit alias masqué $m_{masqué}$ pour ce fournisseur de service à l'identité de l'utilisateur auprès du fournisseur d'identité, à calculer les éléments $m_0 = g_1^{H_1(M)} \cdot m_{masqué} \cdot g_3$ et

  $z_0 = m_0^x \bmod p$, où $g_1$ et $g_3$ sont des éléments publics, $x$ une clé privée du fournisseur d'identité associée à la clé publique $h = g^x \bmod p$, et $H_1$ une fonction de hachage, à prouver de manière interactive avec l'utilisateur que le logarithme discret de $h$ en base $g$ est égal à celui de $z_0$ en base $m_0$, et à transmettre à l'utilisateur la signature partiellement aveugle (puisque $m$ et $m^*$ ont été transmis sous forme masquée au fournisseur d'identité) d'un message $msg = M\|m$, ou, le cas échéant, $msg = M\|m\|m^*$,
- pour l'utilisateur, à démasquer ladite signature partiellement aveugle, et à transmettre au fournisseur de service la signature démasquée avec ledit message $msg$, et
- pour le fournisseur de service, à vérifier la signature, à extraire l'alias $m$ du message $msg$, à authentifier l'utilisateur et à associer ledit alias $m$ à l'identité de l'utilisateur auprès du fournisseur de service.

On notera que dans ce mode de réalisation, la preuve interactive que le logarithme discret de $h$ en base $g$ est égal à celui de $z_0$ en base $m_0$ correspond aux éléments, mentionnés ci-dessus, qui sont transmis à l'utilisateur pour le calcul de la signature.

De même, l'utilisateur peut, lors d'une demande de service auprès d'un fournisseur de service consécutive à ladite phase de fédération d'identités, mettre en oeuvre une phase d'authentification comprenant les étapes consistant :

- pour l'utilisateur, à recevoir du fournisseur de service des données $M$ non confidentielles ainsi que, optionnellement, des données confidentielles $m^*$, à s'authentifier auprès dudit fournisseur d'identité pour ledit fournisseur de service et à transmettre au fournisseur d'identité lesdites données $M$ non confidentielles ainsi que, le cas échéant, lesdites données confidentielles $m^*$ sous forme masquée,
- pour le fournisseur d'identité, à rechercher l'alias masqué $m_{masqué}$ pour ce fournisseur de service associé à l'identité de l'utilisateur auprès du fournisseur d'identité, à calculer les éléments $m_0 = g_1^{H_1(M)} \cdot m_{masqué} \cdot g_3$ et

  $z_0 = m_0^x \bmod p$, où $g_1$ et $g_3$ sont des éléments publics, $x$ une clé privée du fournisseur d'identité associée à la clé publique $h = g^x \bmod p$, et $H_1$ une fonction de hachage, à prouver de manière interactive avec l'utilisateur que le logarithme discret de $h$ en base $g$ est égal à celui de $z_0$ en base $m_0$, et à transmettre à l'utilisateur la signature partiellement aveugle d'un message $msg = M\|m$, ou, le cas échéant, $msg = M\|m\|m^*$,
- pour l'utilisateur, à démasquer ladite signature partiellement aveugle, et à transmettre au fournisseur de service la signature démasquée avec ledit message $msg$, et
- pour le fournisseur de service, à vérifier ladite signature, à récupérer l'identité de l'utilisateur auprès du fournisseur de service à partir de l'alias $m$ extrait du message $msg$, et à fournir le service demandé par l'utilisateur.

L'invention vise également :

- un moyen de stockage de données inamovible comportant des instructions de code de programme informatique pour l'exécution des étapes de l'un quelconque des procédés d'authentification unique d'un utilisateur auprès d'au moins un fournisseur de service succinctement exposés ci-dessus,
- un moyen de stockage de données partiellement ou totalement amovible, comportant des instructions de code de programme informatique pour l'exécution des étapes de l'un quelconque des procédés d'authentification unique d'un utilisateur auprès d'au moins un fournisseur de service succinctement exposés ci-dessus, et
- un programme d'ordinateur contenant des instructions telles que, lorsque ledit programme commande un dispositif de traitement de données programmable, lesdites instructions font que ledit dispositif de traitement de données met en oeuvre l'un quelconque des procédés d'authentification unique d'un utilisateur auprès d'au moins un fournisseur de service succinctement exposés ci-dessus.

Les avantages offerts par ces moyens de stockage de données et ce programme d'ordinateur sont essentiellement les mêmes que ceux offerts par lesdits procédés.

La description qui va suivre en regard des dessins annexés, donnés à titre d'exemples non limitatifs, fera bien comprendre en quoi consiste l'invention et comment elle peut être réalisée.

La figure 1, commentée ci-dessus, est un schéma représentant le modèle de fédération d'identités de Liberty et SAML.

La figure 2 est un schéma représentant un modèle de fédération d'identités conforme à l'invention.

La figure 3 est un diagramme représentant les étapes d'un mécanisme de fédération d'identités utilisant le modèle de la figure 2.

La figure 4 est un diagramme représentant les étapes d'un mécanisme d'authentification unique utilisant le modèle de la figure 2.

La figure 5 est un diagramme d'un schéma de signature partiellement aveugle mis en oeuvre par l'invention.

Le procédé d'authentification unique, objet de l'invention, comprend une première phase, dite phase de fédération d'identités, qui consiste à associer l'identité d'un utilisateur auprès d'un fournisseur d'identité et les identités du même utilisateur auprès de fournisseurs de service. A la suite de cette phase préalable de fédération d'identités, toute demande d'accès à un service de la part de l'utilisateur est soumise à une phase d'authentification proprement dite utilisant la fédération d'identités ainsi établie.

Sur la figure 2 est illustré un modèle de fédération d'identités entre une identité (*user@idp*) d'un utilisateur (« User ») auprès d'un fournisseur d'identité IdP et des identités locales (*user@spa*) et (*user@spb*) dudit utilisateur respectivement auprès de fournisseurs de service $SP_A$ et $SP_B$.

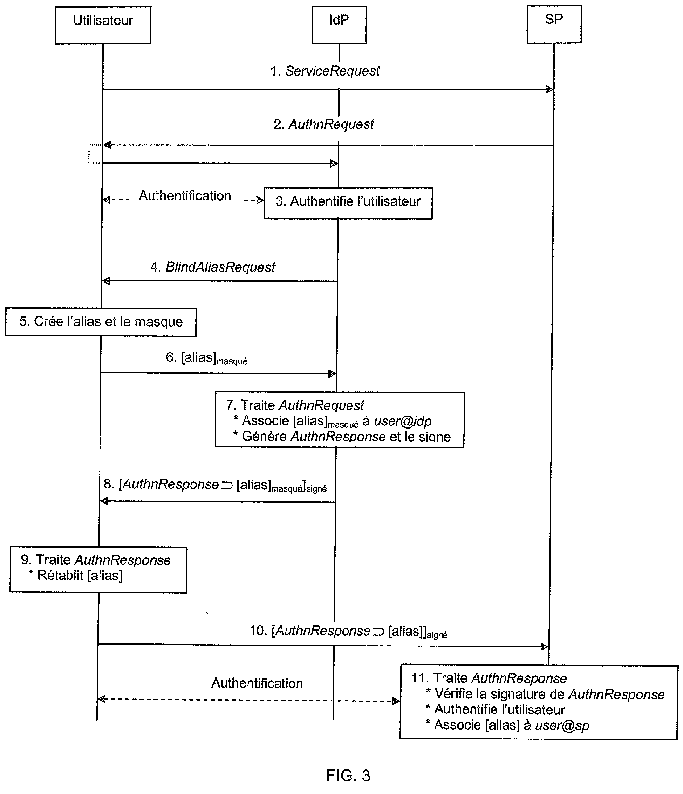

La figure 3 représente un mécanisme de fédération d'identités reposant sur le modèle de la figure 2. Pour des raisons de simplicité de l'exposé, on ne considèrera qu'un seul fournisseur de service SP, étant entendu que ce schéma s'étend immédiatement à un nombre quelconque de fournisseurs de service.

Les étapes du mécanisme de la figure 3 sont les suivants.

1. L'utilisateur accède à un service du fournisseur de service SP.

2. Le fournisseur de service SP redirige l'utilisateur vers le fournisseur d'identité IdP, et fait transmettre à l'IdP par l'utilisateur une requête d'authentification (*AuthnRequest*) signée par SP.

3. Le fournisseur d'identité IdP vérifie la signature de la requête d'authentification (*AuthnRequest*) et authentifie l'utilisateur.

4. Si le fournisseur d'identité IdP constate que l'identité de l'utilisateur (*user@idp*) n'est fédérée à aucune identité chez ce fournisseur de service, il transmet une requête de génération d'alias à l'utilisateur.

5. Le navigateur de l'utilisateur génère un alias de fédération [*alias*] propre au fournisseur de service SP et le masque en un alias masqué ([*alias*]_{masqué}), le masquage utilisant, par exemple, un schéma de signature aveugle non-révocable qui sera détaillé plus loin.

6. Le navigateur de l'utilisateur transmet l'alias de fédération masqué ([*alias*] _{masqué}) au fournisseur d'identité IdP.

7. Le fournisseur d'identité IdP associe l'alias masqué ([*alias*]_{masqué}) à l'identité locale de l'utilisateur (*user@idp*), et génère des éléments permettant à l'utilisateur de calculer une signature d'un message contenant l'alias non masqué [*alias*].

8. Le fournisseur d'identité IdP transmet lesdits éléments à l'utilisateur.

9. Le navigateur de l'utilisateur rétablit l'alias de fédération [*alias*] (démasquage de [*alias*]_{masqué}).

10. L'utilisateur transmet au fournisseur de service SP une réponse d'authentification (*AuthnResponse*) comprenant un message contenant l'alias non masqué [*alias*] et une signature $\sigma$ associée calculée à partir des éléments reçus du fournisseur d'identité IdP.

11. Le fournisseur de service SP reçoit la réponse d'authentification (*AuthnResponse*), vérifie la signature $\sigma$ et en extrait l'alias de fédération [*alias*]. S'il constate qu'aucune identité locale n'est associée à cet alias de fédération, il propose à l'utilisateur de fédérer son identité locale (*user@sp*) avec son identité chez le fournisseur d'identité IdP. Le fournisseur de service SP authentifie l'utilisateur, en déduit son identité locale (*user@sp*) et associe l'alias de fédération [*alias*] à cette identité locale.

L'identité de l'utilisateur chez le fournisseur d'identité (*user@idp*) est alors fédérée à son identité chez le fournisseur de service (*user@sp*).

La figure 2 fournit un exemple d'application du mécanisme de fédération d'identités qui vient d'être décrit.

Les alias [*123*] et [*456*] sont associés respectivement aux identités locales (*user@spa*) et (*user@spb*) de l'utilisateur auprès des fournisseurs de service $SP_A$ et $SP_B$. Chez le fournisseur d'identité IdP, l'identité de l'utilisateur (*user@idp*) est associée aux alias masqués [*123*]$_{masqué}$ et [*456*]$_{masqué}$ respectivement pour les fournisseurs de service $SP_A$ et $SP_B$. La relation entre les alias et les alias masqués est assurée par l'utilisateur. Il est donc impossible pour le fournisseur d'identité IdP et les fournisseurs de service $SP_A$ et $SP_B$ d'établir des corrélations entre leurs bases clients.

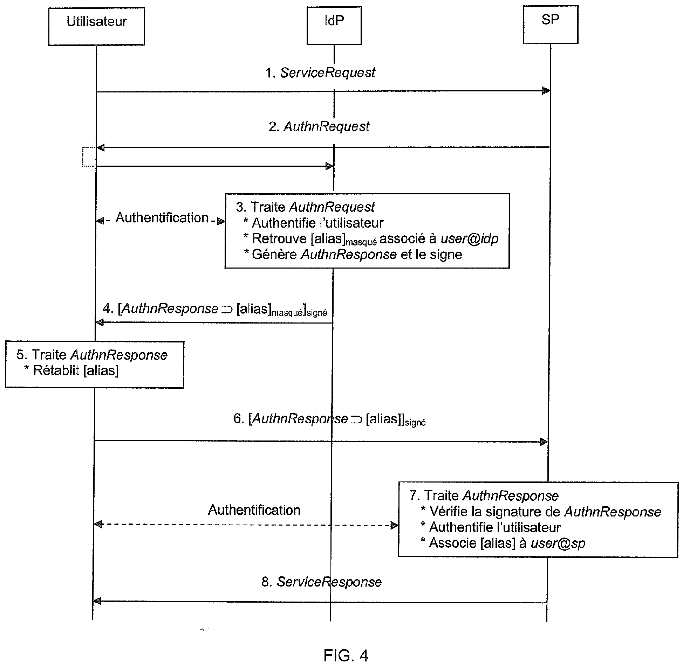

La figure 4 illustre un mécanisme d'authentification de l'utilisateur lors d'une demande d'accès à un service auprès d'un fournisseur de service SP après que les identités de l'utilisateur auprès du fournisseur d'identité IdP et du fournisseur de service SP aient été fédérées.

Ce mécanisme est le suivant.

1. L'utilisateur accède à un service du fournisseur de service SP.

2. Le fournisseur de service SP redirige l'utilisateur vers le fournisseur d'identité IdP, et fait transmettre à l'IdP par l'utilisateur une requête d'authentification (*AuthnRequest*) signée par SP.

3. Le fournisseur d'identité IdP vérifie la signature de la requête d'authentification (*AuthnRequest*) et authentifie l'utilisateur. Il récupère l'alias de fédération masqué ([*alias*]$_{masqué}$) associé à l'identité de l'utilisateur (*user@idp*) pour ce fournisseur de service. Il génère des éléments permettant à l'utilisateur de calculer une signature d'un message contenant l'alias non masqué [*alias*].

4. Le fournisseur d'identité IdP transmet lesdits éléments à l'utilisateur.

5. Le navigateur de l'utilisateur rétablit l'alias de fédération [*alias*] (démasquage de [*alias*]$_{masqué}$).

6. L'utilisateur transmet une réponse d'authentification (*AuthnResponse*) comprenant un message contenant l'alias non masqué [*alias*] et une signature $\sigma$ de ce message calculée à partir des éléments reçus du fournisseur d'identité IdP.

7. Le fournisseur de service reçoit la réponse d'authentification (*AuthnResponse*), vérifie la signature $\sigma$ et en extrait l'alias de fédération [*alias*]. Il récupère à partir de cet alias l'identité locale de l'utilisateur (*user@sp*).

8. Le fournisseur de service fournit le service demandé par l'utilisateur.

La mise en oeuvre de ces mécanismes doit, de préférence, respecter un certain nombre de contraintes utiles pour la sécurité et le respect de la vie privée :

- les alias de fédération doivent être différents d'un fournisseur de service à un autre,
- pour un fournisseur de service donné, les réponses d'authentification doivent contenir le même alias de fédération, sauf si l'utilisateur, le fournisseur d'identité et/ou le fournisseur de service le demandent expressément, et
- l'utilisateur doit pouvoir vérifier qu'une réponse d'authentification ne contient pas un alias destiné à un fournisseur de service autre que celui qui a effectivement signé la requête d'authentification.

Un mode particulier de réalisation des mécanismes de fédération d'identités et d'authentification qui viennent d'être présentés va maintenant être décrit en liaison avec un schéma de signature partiellement aveugle.

Une des particularités de ce schéma est que le signataire d'un message, à savoir le fournisseur d'identité dans le cas de l'invention, peut signer le message bien qu'il n'ait connaissance que d'une partie seulement du message. Le message à signer est donc composé de deux parties : une première partie visible au signataire et une deuxième partie qui lui est masquée. C'est ainsi que, dans le contexte de l'invention, le fournisseur d'identité sera amené à signer un message contenant l'alias de fédération de l'utilisateur alors qu'il ne le connaît pas, seul l'alias masqué lui étant fourni par l'utilisateur.

Ce schéma permet également de contraindre l'utilisateur à faire signer, de manière partiellement aveugle, par le fournisseur d'identité, le message contenant son alias de fédération en lui imposant d'utiliser toujours la même procédure de masquage de l'alias, l'alias de fédération masqué présenté au fournisseur d'identité devant être identique d'une requête d'authentification à l'autre, ceci dans le but d'éviter la fraude côté utilisateur.

Dans la suite de la description, les conventions suivantes seront utilisées :

- [*a*, *b*] désignera l'ensemble des nombres entiers qui sont supérieurs ou égaux à *a,* et inférieurs ou égaux à *b* ; ainsi, [1,3] = {1, 2, 3} ;
- les opérations de multiplication, d'addition et d'exponentiation seront réalisées de manière modulaire, c'est-à-dire en ne conservant que le reste de la division entière du résultat par un module donné ; le calcul de *x* modulo *p* (c'est à dire le reste de la division euclidienne de *x* par *p*) sera noté *x* mod *p* ou *x* [*p*] ;
- on notera $Z_n$ l'ensemble des résidus modulo *n*, c'est à dire l'intervalle [0, *n*-1] = {0, 1, 2,..., *n*-1}, où *n* est un entier strictement positif ;
- on notera $Z_n^*$ l'ensemble des éléments de $Z_n$ qui sont premiers avec *n* (autrement dit les éléments qui admettent un inverse modulo *n*) ; ainsi, $Z_6^* = \{1, 5\}$ ;
- on notera {0, 1}* l'ensemble des chaînes de caractères constituées des caractères 0 et 1 ;
- on notera $\{0, 1\}^l$ le sous-ensemble de {0, 1}* formé par les chaînes de longueur *l* ;
- le symbole désignera la concaténation ;
- on désignera par |*x*| la taille de l'entier *x* exprimée en bits ;
- la relation *a*|*b* signifie que l'entier *a* divise l'entier *b* ;
- la notation $x \in_R E$ signifie que l'élément *x* sera choisi dans l'ensemble fini *E* de manière aléatoire ; et
- les notations " $\xrightarrow{m}$ " et " $\xleftarrow{m}$ " symboliseront la transmission d'un message *m* d'une entité vers une autre.

Le schéma de signature partiellement aveugle impliqué dans le mode de réalisation décrit ici est dérivé d'un schéma de signature simple (c'est-à-dire, non aveugle) utilisant le protocole dit de Chaum-Pedersen (D. Chaum et T. Pedersen, "Wallet databases with observers", Proceedings of EUROCRYPT'92, Lecture Notes in Computer Science, vol. 740, Springer-Verlag, pages 89 à 105).

Le schéma de signature simple de Chaum-Pedersen, désigné dans la suite *SIGNUM,* est le suivant.

Les paramètres publics de ce schéma de signature sont deux nombres premiers *p* et *q* tels que *q*|(*p*-1), et quatre éléments d'un groupe cyclique $G_q$ d'ordre *q*, à savoir *g*, $g_1$, $g_2$ et $g_3$. La clé privée du signataire est un nombre entier *x* ∈ [1, *q-1*] et sa clé publique est l'élément *h* = $g^x$ mod *p*. Dans la suite, *H* et $H_1$ désigneront deux fonctions de hachage résistantes aux collisions (SHA-256 par exemple).

Pour signer un message *msg* de la forme *M*‖*lm*‖*m**, où *M* et *m** ∈ {0,1}* et *m* est un élément de $G_q$ dont le signataire S connaît le logarithme discret en base $g_2$, ce signataire S procède de la manière suivante :

- il génère aléatoirement un élément *ω* ∈ [1, *q-1*],
- il calcule :

$$z = (g_1^{H_1(M)} \cdot m \cdot g_3)^x \bmod p,$$
$$c = H(M\|m^*\|m\|z\| g^{\omega} \|(g_1^{H_1(M)} \cdot m \cdot g_3)^{\omega}), \text{ et}$$
$$r = \omega - cx \bmod q,$$

et

- il génère de manière non-interactive à l'intention de l'entité vérificatrice de la signature une preuve, notée *P*, qu'il connaît le logarithme discret de *m* en base $g_2$, mais sans divulguer la valeur de ce logarithme discret à l'entité vérificatrice.

La signature *σ* de *msg* comprend le triplet (*z, c, r*) et la preuve de connaissance *P*. Pour des détails sur les protocoles de preuve dits "sans transfert de connaissance" (en anglais, "*zero-knowledge proof*"), on pourra se référer aux normes ISO/IEC 9798-5 et 14888-2.

L'entité vérificatrice considère la signature *σ* comme une signature valide du message *msg* si

$$c = H(M\|m^*\|m\|z\| g^r h^c \|(g_1^{H_1(M)} \cdot m \cdot g_3)^r \cdot z^c) \text{ et si } P \text{ est valide.}$$

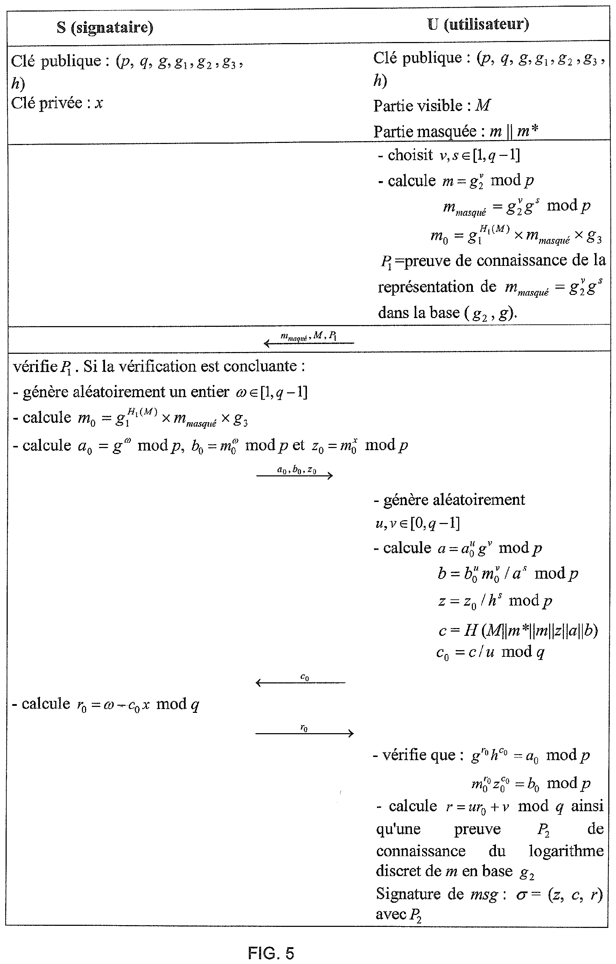

Ce schéma de signature simple peut être transformé en un schéma de signature partiellement aveugle, qui est représenté sur la figure 5 et qui sera appelé *BlindSig* dans la suite.

Comme pour le schéma *SIGNUM,* les paramètres publics du schéma de signature aveugle *BlindSig* sont deux nombres premiers *p* et *q* tels que *q*|(*p*-1), et quatre éléments d'un groupe cyclique $G_q$ d'ordre *q*, à savoir *g*, $g_1$, $g_2$ et $g_3$. La clé privée du signataire est un entier *x* ∈ [1, *q-1*] et sa clé publique est l'élément *h* = $g^x$ mod *p*. Dans la suite, *H* et $H_1$ désigneront deux fonctions de hachage résistantes aux collisions (SHA-256 par exemple).

Pour obtenir une signature partiellement aveugle d'un message *msg* =*M*‖*m*‖*m**, où *M* désigne une partie destinée à être visible pour le signataire et *m* et *m** des parties destinées à être masquées pour le signataire, l'utilisateur U doit dans un premier temps masquer le message *m*. Pour cela, il tire au hasard un élément $s \in [1, q\text{-}1]$, calcule $m_{masqué} = m \cdot g^s \bmod p$, et envoie cette valeur au signataire S. Ce dernier calcule $\tilde{m}_0 = g_1^{H_1(M)} \cdot m_{masqué} \cdot g_3$ et $z_0 = m_0^x \bmod p$, et prouve de manière interactive (avec un mécanisme de question $c_0$ et réponse $r_0$) avec l'utilisateur U que le logarithme discret de *h* en base *g* est égal à celui de $z_0$ en base $m_0$. A partir de cette preuve, l'utilisateur U peut récupérer la signature $\sigma = (z, c, r)$, de type Chaum-Pedersen, du message *msg,* ainsi que la preuve de connaissance $P_2$ du logarithme discret de *m* en base $g_2$.

On vérifie aisément que $\sigma$ est une signature valide de *msg* selon l'algorithme *SIGNUM*.

Le mécanisme de fédération d'identités mettant en oeuvre le schéma de signature partiellement aveugle *BlindSig* décrit ci-dessus devient alors le suivant.

1. L'utilisateur accède à un service du fournisseur de service SP.

2. Le fournisseur de service SP redirige l'utilisateur vers le fournisseur d'identité IdP, et fait transmettre à l'IdP par l'utilisateur une requête d'authentification (*AuthnRequest*) signée par SP.

Cette requête contient diverses informations qui peuvent être classées en deux catégories.

Une première catégorie concerne les informations, telles que l'identifiant du fournisseur ou le niveau d'authentification demandé, qui, même en cas de collusion, ne permettraient pas au fournisseur d'identité IdP et au fournisseur de service SP de recouper leurs bases clients. Les informations de cette catégorie sont regroupées dans la partie *M* du message *msg* qui devra être signé de manière partiellement aveugle par le fournisseur d'identité IdP.

Une deuxième catégorie concerne les informations, telles que l'identifiant de requête, voire la date de la requête, qui, au contraire, permettraient au fournisseur d'identité IdP et au fournisseur de service SP de recouper leurs bases clients. Les informations de cette catégorie sont regroupées dans la partie *m\** du message *msg.*

3. Le fournisseur d'identité IdP vérifie la signature de la requête d'authentification et authentifie l'utilisateur U.

4. Si le fournisseur d'identité IdP constate que l'identité de l'utilisateur (*user@idp*) n'est fédérée à aucune identité chez ce fournisseur de service SP, il transmet une requête de génération d'alias à l'utilisateur U.

5. Le navigateur de l'utilisateur U génère aléatoirement deux entiers *v, s* $\in$ [1,*q*-1] et calcule son alias de fédération ([*alias*] = *m* = $g_2^v \bmod p$) propre au fournisseur de service SP, puis le masque comme décrit ci-dessus :

$$[alias]_{masqué} = m_{masqué} = g_2^v \cdot g^s \bmod p.$$

6. Le navigateur de l'utilisateur transmet l'alias de fédération masqué ([*alias*]$_{masqué}$) au fournisseur d'identité IdP ainsi qu'une preuve de connaissance $P_1$ de la représentation de $[alias]_{masqué} = m_{masqué} = g_2^v \cdot g^s \bmod p$ dans la base ($g_2$,*g*).

7. Si la preuve $P_1$ est valide, le fournisseur d'identité IdP associe l'alias masqué ([*alias*]$_{masqué}$) à l'identité locale de l'utilisateur (*user@idp*). Le fournisseur IdP et l'utilisateur U exécutent ensuite le protocole *BlindSig,* le fournisseur d'identité IdP ayant pour entrées les données M et [*alias*]$_{masqué}$ et l'utilisateur U les données M, [*alias*]$_{masqué}$ et *m\**. A l'issue de ce protocole, l'utilisateur U calcule une signature $\sigma$ du message *msg* = M‖*m*‖*m\**=M[*alias*]‖*m\** à partir des éléments reçus du fournisseur d'identité IdP signataire (partiellement en aveugle) du message.

8. L'utilisateur U transmet au fournisseur de service SP une réponse d'authentification (*AuthnResponse*) contenant le message *msg* et la signature $\sigma$.

9. Le fournisseur de service SP reçoit la réponse d'authentification (*AuthnResponse*), vérifie la signature $\sigma$ du message *msg,* en vérifiant en particulier qu'elle porte bien sur un identifiant de requête qu'il a généré récemment, et en extrait l'alias de fédération ([*alias*]). S'il constate qu'aucune identité locale n'est associée à cet alias de fédération, il propose à l'utilisateur de fédérer son identité locale (*user@sp*) avec son identité chez le fournisseur d'identité IdP. Le fournisseur de service SP authentifie l'utilisateur, en déduit son identité locale (*user@sp*) et associe l'alias de fédération ([*alias*]) à cette identité.

L'identité de l'utilisateur chez le fournisseur d'identité (*user@idp*) est alors fédérée à son identité chez le fournisseur de service (*user@sp*).

Le mécanisme d'authentification lors d'une demande de service consécutive à la phase de fédération d'identités décrite ci-dessus est alors le suivant.

1. L'utilisateur U accède à un service du fournisseur de service SP.

2. Le fournisseur de service SP redirige l'utilisateur U vers le fournisseur d'identité IdP, et fait transmettre à l'IdP par l'utilisateur une requête d'authentification (*AuthnRequest*) contenant une signature par le fournisseur de service SP du message *M* défini précédemment.

3. Le fournisseur d'identité IdP vérifie la signature de la requête d'authentification et authentifie l'utilisateur U. Il récupère l'alias de fédération masqué ([*alias*]$_{masqué}$) associé à l'identité de l'utilisateur (*user@idp*) pour ce fournisseur de service. Le fournisseur d'identité IdP et l'utilisateur U exécutent ensuite le protocole *BlindSig*, le fournisseur d'identité IdP ayant pour entrées les données *M* et [*alias*]$_{masqué}$, et l'utilisateur U les données *M*, [*alias*]$_{masqué}$ et *m\**. A l'issue de ce protocole, l'utilisateur U calcule une signature $\sigma$ du message *msg* = $M\|m\|m^* = M[alias]\|m^*$ à partir des éléments reçus du fournisseur d'identité IdP signataire (partiellement en aveugle) du message.

4. L'utilisateur U transmet au fournisseur de service SP une réponse d'authentification (*AuthnResponse*) contenant le message *msg* et la signature $\sigma$.

5. Le fournisseur de service SP reçoit la réponse d'authentification (*AuthnResponse*), vérifie la signature $\sigma$ du message *msg,* en vérifiant en particulier qu'elle porte bien sur un identifiant de requête qu'il a généré récemment, et en extrait l'alias de fédération ([*alias*]). Il récupère à partir de cet alias l'identité locale de l'utilisateur (*user@sp*).

6. Le fournisseur de service SP fournit le service demandé par l'utilisateur U.

## Revendications

1. Procédé d'authentification unique d'un utilisateur (U) auprès d'au moins un fournisseur de service (SP), ledit procédé comprenant une phase préalable de fédération d'identités entre une identité (*user@sp*) dudit utilisateur (U) auprès dudit fournisseur de service et une identité (*user@idp*) dudit utilisateur (U) auprès d'un fournisseur d'identité (IdP), **caractérisé en ce que** ladite phase préalable de fédération d'identités comprend des étapes consistant :

   - pour l'utilisateur (U), à générer un alias ([*alias*]) de l'utilisateur pour ce fournisseur de service (SP) et à transmettre audit fournisseur d'identité (IdP) un alias masqué ([*alias*]$_{masqué}$) déduit dudit alias,
   - pour le fournisseur d'identité (IdP), à associer ledit alias masqué ([*alias*]$_{masqué}$) pour ce fournisseur de service (SP) à l'identité de l'utilisateur (*user@idp*) auprès du fournisseur d'identité (IdP), et à transmettre à l'utilisateur (U) des éléments pour le calcul par l'utilisateur d'une signature ($\sigma$) d'un message *(msg)* contenant l'alias non masqué ([*alias*]),
   - pour l'utilisateur (U), à calculer ladite signature ($\sigma$) et à transmettre au fournisseur de service (SP) ledit message (*msg*) avec ladite signature ($\sigma$), et
   - pour le fournisseur de service (SP), à vérifier ladite signature ($\sigma$), à authentifier l'utilisateur (U) et à associer ledit alias ([*alias*]) à l'identité de l'utilisateur (*user@sp*) auprès du fournisseur de service (SP).

2. Procédé d'authentification unique selon la revendication 1, comprenant une phase d'authentification, lors d'une demande de service auprès d'un fournisseur de service (SP) consécutive à ladite phase de fédération d'identités, ladite phase d'authentification comprenant des étapes consistant :

   - pour l'utilisateur (U), à s'authentifier auprès du fournisseur d'identité (IdP) pour ledit fournisseur de service,
   - pour le fournisseur d'identité (IdP), à rechercher l'alias masqué ([*alias*]$_{masqué}$) pour ledit fournisseur de service (SP) associé à l'identité (*user@idp*) dudit utilisateur auprès dudit fournisseur d'identité (IdP), et à transmettre à l'utilisateur (U) des éléments pour le calcul par l'utilisateur d'une signature ($\sigma$) d'un message *(msg)* contenant l'alias non masqué ([*alias*]),
   - pour l'utilisateur (U), à calculer ladite signature ($\sigma$) et à transmettre au fournisseur de service (SP) ledit message (*msg*) avec ladite signature ($\sigma$), et
   - pour le fournisseur de service (SP), à vérifier ladite signature ($\sigma$), à récupérer l'identité (*user@sp*) de l'utilisateur auprès du fournisseur de service à partir de l'alias ([*alias*]), et à fournir le service demandé par l'utilisateur (U).

3. Procédé selon l'une des revendications 1 ou 2, dans lequel lesdits éléments fournis par le fournisseur d'identité représentent une signature partiellement aveugle d'un message (*msg*) contenant ledit alias masqué.

4. Procédé selon les revendications 1 et 3, dans lequel ladite fédération d'identités comprend les étapes consistant :

   - pour l'utilisateur (U), à recevoir du fournisseur de service (SP) des données *M* non confidentielles ainsi que, optionnellement, des données confidentielles *m\**, puis à générer un alias *m* de l'utilisateur pour ce fournisseur de service, et à transmettre audit fournisseur d'identité (IdP) lesdites données *M* non confidentielles, ledit alias *m* sous forme masquée : $m_{masqué} = m \cdot g^s \bmod p$, où *g* et *p* sont des éléments publics et *s* un élément choisi par l'utilisateur (U), ainsi que, le cas échéant, lesdites données confidentielles *m\** sous forme masquée,

- pour le fournisseur d'identité (IdP), à associer ledit alias masqué $m_{masqué}$ pour ce fournisseur de service (SP) à l'identité (*user@idp*) de l'utilisateur (U) auprès du fournisseur d'identité (IdP), à calculer les éléments

$$m_0 = g_1^{H_1(M)} \cdot m_{masqué} \cdot g_3 \text{ et } z_0 = m_0^x \mod p,$$ où $g_1$ et $g_3$ sont des éléments publics, $x$ une clé privée du fournisseur d'identité (IdP) associée à la clé publique $h = g^x \mod p$, et $H_1$ une fonction de hachage, à prouver de manière interactive avec l'utilisateur (U) que le logarithme discret de $h$ en base $g$ est égal à celui de $z_0$ en base $m_0$, et à transmettre à l'utilisateur (U) la signature partiellement aveugle d'un message $msg = M\|m$, ou, le cas échéant, $msg = M\|m\|m^*$,

- pour l'utilisateur (U), à démasquer ladite signature partiellement aveugle, et à transmettre au fournisseur de service (SP) la signature démasquée ($\sigma$) avec ledit message $msg$, et

- pour le fournisseur de service (SP), à vérifier la signature ($\sigma$), à extraire l'alias $m$ du message $msg$, à authentifier l'utilisateur (U) et à associer ledit alias $m$ à l'identité (*user@sp*) de l'utilisateur (U) auprès du fournisseur de service (SP).

5. Procédé selon la revendication 4, comprenant une phase d'authentification, lors d'une demande de service auprès d'un fournisseur de service (SP) consécutive à ladite phase de fédération d'identités, ladite phase d'authentification comprenant des étapes consistant :

- pour l'utilisateur (U), à recevoir du fournisseur de service (SP) des données $M$ non confidentielles ainsi que, optionnellement, des données confidentielles $m^*$, à s'authentifier auprès dudit fournisseur d'identité (IdP) pour ledit fournisseur de service (SP) et à transmettre au fournisseur d'identité (IdP) lesdites données $M$ non confidentielles ainsi que, le cas échéant, lesdites données confidentielles $m^*$ sous forme masquée,

- pour le fournisseur d'identité (IdP), à rechercher l'alias masqué $m_{masqué}$ pour ce fournisseur de service (SP) associé à l'identité (*user@idp*) de l'utilisateur (U) auprès du fournisseur d'identité (IdP), à calculer les éléments

$$m_0 = g_1^{H_1(M)} \cdot m_{masqué} \cdot g_3 \text{ et } z_0 = m_0^x \mod p,$$ où $g_1$ et $g_3$ sont des éléments publics, $x$ une clé privée du fournisseur d'identité (IdP) associée à la clé publique $h = g^x \mod p$, et $H_1$ une fonction de hachage, à prouver de manière interactive avec l'utilisateur (U) que le logarithme discret de $h$ en base $g$ est égal à celui de $z_0$ en base $m_0$, et à transmettre à l'utilisateur (U) la signature partiellement aveugle d'un message $msg = M\|m$, ou, le cas échéant, $msg = M\|m\|m^*$,

- pour l'utilisateur (U), à démasquer ladite signature partiellement aveugle, et à transmettre au fournisseur de service (SP) la signature démasquée ($\sigma$) avec ledit message $msg$, et

- pour le fournisseur de service (SP), à vérifier ladite signature ($\sigma$), à récupérer l'identité de l'utilisateur (*user@sp*) auprès du fournisseur de service (SP) à partir de l'alias $m$ extrait du message $msg$, et à fournir le service demandé par l'utilisateur (U).

6. Moyen de stockage de données inamovible comportant des instructions de code de programme informatique pour l'exécution des étapes d'un procédé selon l'une quelconque des revendications 1 à 5.

7. Moyen de stockage de données partiellement ou totalement amovible, comportant des instructions de code de programme informatique pour l'exécution des étapes d'un procédé selon l'une quelconque des revendications 1 à 5.

8. Programme d'ordinateur contenant des instructions telles que, lorsque ledit programme commande un dispositif de traitement de données programmable, lesdites instructions font que ledit dispositif de traitement de données met en oeuvre un procédé selon l'une quelconque des revendications 1 à 5.

9. Table de fédération accessible à un fournisseur d'identité (IdP) et associée à l'identité (*user@idp*) d'un utilisateur (U) enregistré auprès dudit fournisseur d'identité (IdP), **caractérisée en ce qu'**elle fait correspondre au moins un fournisseur de service (SP) avec un alias masqué ([*alias*]$_{masqué}$) respectif obtenu en masquant un alias ([*alias*]) associant ledit fournisseur d'identité (IdP) à l'identité (*user@sp*) dudit utilisateur (U) auprès dudit fournisseur de service (SP).

**Patentansprüche**

1. Verfahren zur Einzelauthentifizierung eines Benutzers (U) bei mindestens einem Dienstanbieter (SP), wobei das Verfahren eine vorhergehende Phase des Identitätsverbunds zwischen einer Identität (*user@sp*) des Benutzers (U) beim Dienstanbieter und einer Identität (*user@idp*) des Benutzers (U) bei einem Identity-Provider (IdP) enthält, **dadurch gekennzeichnet, dass** die vorhergehende Phase des Identitätsverbunds Schritte enthält, die darin bestehen:

- für den Benutzer (U), einen Aliasnamen ([*alias*]) des Benutzers für diesen Dienstanbieter (SP) zu generieren und an den Identity-Provider (IdP) einen vom Aliasnamen abgeleiteten maskierten Aliasnamen ([*alias*]$_{masqué}$) zu übertragen,
- für den Identity-Provider (IdP), den maskierten Aliasnamen ([*alias*]$_{masqué}$) für diesen Dienstanbieter (SP) der Identität (*user@idp*) des Benutzers beim Identity-Provider (IdP) zuzuordnen, und an den Benutzer (U) Elemente zur Berechnung durch den Benutzer einer Signatur (σ) einer Nachricht (*msg*) zu übertragen, die den nicht maskierten Aliasnamen ([*alias*]) enthält,
- für den Benutzer (U), die Signatur (σ) zu berechnen und an den Dienstanbieter (SP) die Nachricht *(msg)* mit der Signatur (σ) zu übertragen, und
- für den Dienstanbieter (SP), die Signatur (σ) zu überprüfen, den Benutzer (U) zu authentifizieren und den Aliasnamen ([*alias*]) der Identität (*user@sp*) des Benutzers beim Dienstanbieter (SP) zuzuordnen.

2. Einzelidentifizierungsverfahren nach Anspruch 1, das eine Authentifizierungsphase bei einer Dienstanforderung bei einem Dienstanbieter (SP) nach der Phase des Identitätsverbunds enthält, wobei die Authentifizierungsphase Schritte enthält, die darin bestehen:

- für den Benutzer (U), sich beim Identity-Provider (IdP) für den Dienstanbieter zu authentifizieren,
- für den Identity-Provider (IdP), den maskierten Aliasnamen ([*alias*]$_{masqué}$) für den Dienstanbieter (SP) zu suchen, der der Identität (*user@idp*) des Benutzers beim Identity-Provider (IdP) zugeordnet ist, und an den Benutzer (U) Elemente zur Berechnung durch den Benutzer einer Signatur (σ) einer Nachricht *(msg)* zu übertragen, die den nicht maskierten Aliasnamen ([*alias*]) enthält,
- für den Benutzer (U), die Signatur (σ) zu berechnen und an den Dienstanbieter (SP) die Nachricht (*msg*) mit der Signatur (σ) zu übertragen, und
- für den Dienstanbieter (SP), die Signatur (σ) zu überprüfen, die Identität (*user@sp*) des Benutzers beim Dienstanbieter ausgehend vom Aliasnamen ([*alias*]) wiederzugewinnen und den vom Benutzer (U) angeforderten Dienst zu liefern.

3. Verfahren nach einem der Ansprüche 1 oder 2, wobei die vom Identity-Provider gelieferten Elemente eine teilweise blinde Signatur einer Nachricht *(msg)* darstellen, die den maskierten Aliasnamen enthält.

4. Verfahren nach den Ansprüchen 1 und 3, wobei der Identitätsverbund die Schritte umfasst, die darin bestehen:

- für den Benutzer (U), vom Dienstanbieter (SP) nicht vertrauliche Daten *M* sowie optional vertrauliche Daten *m\** zu empfangen, dann einen Aliasnamen *m* des Benutzers für diesen Dienstanbieter zu generieren, und an den Identity-Provider (IdP) die nicht vertraulichen Daten *M*, den Aliasname *m* in maskierter Form: $m_{masqué} = m.g^s$ mod *p*, wobei wobei *g* und *p* öffentliche Elemente sind und *s* ein vom Benutzer (U) gewähltes Element ist, sowie ggf. die vertraulichen Daten *m\** in maskierter Form zu übertragen,
- für den Identity-Provider (IdP), den maskierten Aliasnamen $m_{masqué}$ für diesen Dienstanbieter (SP) der Identität (*user@idp*) des Benutzers (U) beim Identity-Provider (IdP) zuzuordnen, die Elemente

$$m_0 = g_1^{H_1(M)}.m_{masqué}.g_3 \text{ und } z_0 = m_0^x \text{ mod } p \text{ zu berechnen, wobei } g_1 \text{ und } g_3 \text{ öffentliche Elemente}$$

sind, *x* ein privater Schlüssel des Identity-Providers (IdP), der dem öffentlichen Schlüssel *h* = *g^x* mod *p* zugeordnet ist, und $H_1$ eine Hashfunktion ist, interaktiv mit dem Benutzer (U) zu beweisen, dass der diskrete Logarithmus *h* zur Basis *g* gleich demjenigen von $z_0$ zur Basis $m_0$ ist, und an den Benutzer (U) die teilweise blinde Signatur einer Nachricht *msg* = *M‖m* oder ggf. *msg* = *M‖m‖m\** zu übertragen,
- für den Benutzer (U), die teilweise blinde Signatur zu demaskieren und an den Dienstanbieter (SP) die demaskierte Signatur (σ) mit der Nachricht *msg* zu übertragen, und
- für den Dienstanbieter (SP), die Signatur (σ) zu überprüfen, den Aliasnamen *m* aus der Nachricht *msg* zu entnehmen, den Benutzer (U) zu authentifizieren und den Aliasnamen *m* der Identität (*user@sp*) des Benutzers (U) beim Dienstanbieter (SP) zuzuordnen.

5. Verfahren nach Anspruch 4, das eine Authentifizierungsphase bei einer Dienstanforderung bei einem Dienstanbieter (SP) nach der Phase des Identitätsverbunds umfasst, wobei die Authentifizierungsphase Schritte umfasst, die darin bestehen:

- für den Benutzer (U), vom Dienstanbieter (SP) nicht vertrauliche Daten *M* sowie optional vertrauliche Daten *m\** zu empfangen, sich beim Identity-Provider (IdP) für den Dienstanbieter (SP) zu authentifizieren und an den Identity-Provider (IdP) die nicht vertraulichen Daten *M* sowie ggf. die vertraulichen Daten *m\** in maskierter Form zu übertragen,

- für den Identity-Provider (IdP), den maskierten Aliasnamen $m_{masqué}$ für diesen Dienstanbieter (SP), der der Identität (*user@idp*) des Benutzers (U) beim Identity-Provider (IdP) zugeordnet ist, zu suchen, die Elemente $m_0 = g_1^{H_1(M)} \cdot m_{masqué} \cdot g_3$ und $z_0 = m_0^x$ mod *p* zu berechnen, wobei $g_1$ und $g_3$ öffentliche Elemente sind, *x* ein privater Schlüssel des Identity-Providers (IdP), der dem öffentlichen Schlüssel $h = g^x$ mod *p* zugeordnet ist, und $H_1$ eine Hashfunktion ist, interaktiv mit dem Benutzer (U) zu beweisen, dass der diskrete Logarithmus von *h* zur Basis *g* gleich demjenigen von $z_0$ zur Basis $m_0$ ist, und an den Benutzer (U) die teilweise blinde Signatur einer Nachricht *msg* = *M*‖*m* oder ggf. *msg* = *M*‖*m*‖*m\** zu übertragen,

- für den Benutzer (U), die teilweise blinde Signatur zu demaskieren, und an den Dienstanbieter (SP) die demaskierte Signatur (σ) mit der Nachricht *msg* zu übertragen, und

- für den Dienstanbieter (SP), die Signatur (σ) zu überprüfen, die Identität des Benutzers (*user@sp*) beim Dienstanbieter (SP) ausgehend vom aus der Nachricht *msg* entnommenen Aliasnamen *m* wiederzugewinnen, und den vom Benutzer (U) angeforderten Dienst zu liefern.

**6.** Nicht entfernbare Datenspeichereinrichtung, die EDV-Programmcodeanweisungen für die Ausführung der Schritte eines Verfahrens nach einem der Ansprüche 1 bis 5 aufweist.

**7.** Teilweise oder vollständig entfernbare Datenspeichereinrichtung, die EDV-Programmcodeanweisungen für die Ausführung der Schritte eines Verfahrens nach einem der Ansprüche 1 bis 5 aufweist.

**8.** Computerprogramm, das derartige Anweisungen enthält, dass, wenn das Programm eine programmierbare Datenverarbeitungsvorrichtung steuert, die Anweisungen dazu führen, dass die Datenverarbeitungsvorrichtung ein Verfahren nach einem der Ansprüche 1 bis 5 durchführt.

**9.** Verbundtabelle, die für einen Identity-Provider (IdP) zugänglich und der Identität (*user@idp*) eines Benutzers (U) zugeordnet ist, der beim Identity-Provider (IdP) registriert ist, **dadurch gekennzeichnet, dass** sie mindestens einen Dienstanbieter (SP) mit einem jeweiligen maskierten Aliasnamen ([*alias*]$_{masqué}$) in Übereinstimmung bringt, der durch Maskieren eines Aliasnamens ([*alias*]) erhalten wird, der den Identity-Provider (IdP) der Identität (*user@sp*) des Benutzers (U) beim Dienstanbieter (SP) zuordnet.

**Claims**

**1.** Method for the unique authentication of a user (U) by at least one service provider (SP), said method comprising a preliminary phase of federating identities between an identity (*user@sp*) of said user (U) from said service provider and an identity (*user@idp*) of said user (U) from an identity provider (IdP), **characterized in that** said preliminary identity federation phase comprises steps consisting:

- for the user (U), in generating an alias ([*alias*]) of the user for this service provider (SP), and in transmitting, to said identity provider (IdP), a masked alias ([*alias*]$_{masked}$) derived from said alias,
- for the identity provider (IdP), in associating said masked alias ([*alias*]$_{masked}$) for this service provider (SP) with the identity of the user (*user@idp*) from the identity provider (IdP), and in transmitting elements to the user (U) so that the user can calculate a signature (σ) of a message *(msg)* containing the unmasked alias ([*alias*]),
- for the user (U), in calculating said signature (σ) and in transmitting, to the service provider (SP), said message (*msg*) with said signature (σ), and
- for the service provider (SP), in checking said signature (σ), in authenticating the user (U), and in associating said alias ([*alias*]) with the identity of the user (*user@sp*) from the service provider (SP).

**2.** Unique authentication method according to Claim 1, comprising an authentication phase, during a service request to a service provider (SP), following said identity federation phase, said authentication phase comprising steps consisting:

- for the user (U), in authenticating themselves to the identity provider (IdP) for said service provider,
- for the identity provider (IdP), in searching for the masked alias ([alias]$_{masked}$) for said service provider (SP) associated with the identity (*user@idp*) of said user from said identity provider (IdP), and in transmitting elements to the user (U) so that the user can calculate a signature ($\sigma$) of a message *(msg)* containing the unmasked alias ([*alias*]),
- for the user (U), in calculating said signature ($\sigma$) and in transmitting, to the service provider (SP), said message *(msg)* with said signature ($\sigma$), and
- for the service provider (SP), in checking said signature ($\sigma$), in recovering the identity (*user@sp*) of the user from the service provider on the basis of the alias ([*alias*]), and in providing the service requested by the user (U).

3. Method according to either of Claims 1 and 2, wherein said elements provided by the identity provider represent a partially blind signature of a message *(msg)* containing said masked alias.

4. Method according to Claims 1 and 3, wherein said identity federation comprises steps consisting:

- for the user (U), in receiving, from the service provider (SP), non-confidential data *M*, and, optionally, confidential data *m\*,* and then in generating an alias *m* of the user for this service provider, and in transmitting, to said identity provider (IdP), said non-confidential data *M*, said alias *m* in masked form: $m_{masxed} = m \cdot g^s \bmod p$, where *g* and *p* are public elements and *s* is an element chosen by the user (U), and, if appropriate, said confidential data *m\** in masked form,
- for the identity provider (IdP), in associating said masked alias $m_{masked}$ for this service provider (SP) with the identity (*user@idp*) of the user (U) from the identity provider (IdP), in calculating the elements $m_0 = g_1^{H_1(M)} \cdot m_{masked} \cdot g_3$ and $z_0 = m_0^x \bmod p$, where $g_1$ and $g_3$ are public elements, *x* is a private key of the identity provider (IdP), which key is associated with the public key $h = g^x \bmod p$, and $H_1$ is a hash function, in proving interactively with the user (U) that the discrete logarithm of *h* to base *g* is equal to that of $z_0$ to base $m_0$, and in transmitting, to the user (U), the partially blind signature of a message $msg = M\|m$, or, if appropriate, $msg = M\|m\|m^*$,
- for the user (U), in demasking said partially blind signature, and in transmitting, to the service provider (SP), the demasked signature ($\sigma$) with said message *msg,* and
- for the service provider (SP), in checking the signature ($\sigma$), in extracting the alias *m* from the message *msg,* in authenticating the user (U), and in associating said alias *m* with the identity (*user@sp*) of the user (U) from the service provider (SP).

5. Method according to Claim 4, comprising an authentication phase, during a service request to a service provider (SP), following said identity federation phase, said authentication phase comprising steps consisting:

- for the user (U), in receiving, from the service provider (SP), non-confidential data *M*, and, optionally, confidential data *m\*,* in authenticating themselves to said identity provider (IdP) for said service provider (SP), and in transmitting, to the identity provider (IdP), said non-confidential data *M*, and, if appropriate, said confidential data *m\** in masked form,
- for the identity provider (IdP), in searching for the masked alias $m_{masked}$ for this service provider (SP) associated with the identity (*user@idp*) of the user (U) from the identity provider (IdP), in calculating the elements $m_0 = g_1^{H_1(M)} \cdot m_{masked} \cdot g_3$ and $z_0 = m_0^x \bmod p$, where $g_1$ and $g_3$ are public elements, *x* is a private key of the identity provider (IdP), which key is associated with the public key $h = g^x \bmod p$, and $H_1$ is a hash function, in proving interactively with the user (U) that the discrete logarithm of *h* to base *g* is equal to that of $z_0$ to base $m_0$, and in transmitting, to the user (U), the partially blind signature of a message $msg = M\|m$, or, if appropriate, $msg = M\|m\|m^*$,
- for the user (U), in demasking said partially blind signature, and in transmitting, to the service provider (SP), the demasked signature ($\sigma$) with said message *msg,* and
- for the service provider (SP), in checking said signature ($\sigma$), in recovering the identity of the user (*user@sp*) from the service provider (SP) on the basis of the alias *m* extracted from the message *msg,* and in providing the service requested by the user (U).

6. Irremovable data storage means comprising computer program code instructions for executing the steps of a method according to any one of Claims 1 to 5.

7. Partially or completely removable data storage means comprising computer program code instructions for executing the steps of a method according to any one of Claims 1 to 5.

8. Computer program containing instructions such that, when said program controls a programmable data processing device, said instructions make the data processing device implement a method according to any one of Claims 1 to 5.

9. Federation table accessible to an identity provider (IdP) and associated with the identity (*user@idp*) of a user (U) registered with said identity provider (IdP), **characterized in that** it makes at least one service provider (SP) correspond to a respective masked alias ([*alias*]$_{masked}$) obtained by masking an alias ([*alias*]) associating said identity provider (IdP) with the identity (*user@sp*) of said user (U) from said service provider (SP).

FIG. 1 (Art antérieur)

FIG. 2

| Utilisateur | IdP | SP |
|---|---|---|

1. *ServiceRequest*

2. *AuthnRequest*

Authentification — ▶ 3. Authentifie l'utilisateur

4. *BlindAliasRequest*

5. Crée l'alias et le masque

6. [alias]$_{masqué}$

7. Traite *AuthnRequest*
* Associe [alias]$_{masqué}$ à *user@idp*
* Génère *AuthnResponse* et le signe

8. [*AuthnResponse* ⊃ [alias]$_{masqué}$]$_{signé}$

9. Traite *AuthnResponse*
* Rétablit [alias]

10. [*AuthnResponse* ⊃ [alias]]$_{signé}$

Authentification

11. Traite *AuthnResponse*
* Vérifie la signature de *AuthnResponse*
* Authentifie l'utilisateur
* Associe [alias] à *user@sp*

FIG. 3

| Utilisateur | IdP | SP |
|---|---|---|

1. *ServiceRequest*

2. *AuthnRequest*

3. Traite *AuthnRequest*
   * Authentifie l'utilisateur
   * Retrouve [alias]$_{masqué}$ associé à *user@idp*
   * Génère *AuthnResponse* et le signe

- Authentification -

4. [*AuthnResponse* ⊃ [alias]$_{masqué}$]$_{signé}$

5. Traite *AuthnResponse*
   * Rétablit [alias]

6. [*AuthnResponse* ⊃ [alias]]$_{signé}$

7. Traite *AuthnResponse*
   * Vérifie la signature de *AuthnResponse*
   * Authentifie l'utilisateur
   * Associe [alias] à *user@sp*

Authentification

8. *ServiceResponse*

FIG. 4

| S (signataire) | U (utilisateur) |
|---|---|
| Clé publique : $(p, q, g, g_1, g_2, g_3, h)$ <br> Clé privée : $x$ | Clé publique : $(p, q, g, g_1, g_2, g_3, h)$ <br> Partie visible : $M$ <br> Partie masquée : $m \parallel m^*$ |
|  | - choisit $v, s \in [1, q-1]$ <br> - calcule $m = g_2^v \bmod p$ <br><br> $\quad m_{masqué} = g_2^v g^s \bmod p$ <br><br> $\quad m_0 = g_1^{H_1(M)} \times m_{masqué} \times g_3$ <br><br> $P_1$ =preuve de connaissance de la représentation de $m_{masqué} = g_2^v g^s$ dans la base ($g_2$, $g$). |
| $\xleftarrow{\quad m_{masqué}, M, P_1 \quad}$ | |
| vérifie $P_1$. Si la vérification est concluante : <br> - génère aléatoirement un entier $\omega \in [1, q-1]$ <br> - calcule $m_0 = g_1^{H_1(M)} \times m_{masqué} \times g_3$ <br> - calcule $a_0 = g^\omega \bmod p$, $b_0 = m_0^\omega \bmod p$ et $z_0 = m_0^x \bmod p$ | |
| $\xrightarrow{\quad a_0, b_0, z_0 \quad}$ | |
|  | - génère aléatoirement <br> $u, v \in [0, q-1]$ <br> - calcule $a = a_0^u g^v \bmod p$ <br><br> $\quad b = b_0^u m_0^v / a^s \bmod p$ <br><br> $\quad z = z_0 / h^s \bmod p$ <br><br> $\quad c = H(M\|m^*\|m\|z\|a\|b)$ <br> $\quad c_0 = c / u \bmod q$ |
|  | $\xleftarrow{\quad c_0 \quad}$ |
| - calcule $r_0 = \omega - c_0 x \bmod q$ | |
| $\xrightarrow{\quad r_0 \quad}$ | |
|  | - vérifie que : $g^{r_0} h^{c_0} = a_0 \bmod p$ <br><br> $\quad m_0^{r_0} z_0^{c_0} = b_0 \bmod p$ <br> - calcule $r = u r_0 + v \bmod q$ ainsi qu'une preuve $P_2$ de connaissance du logarithme discret de $m$ en base $g_2$ <br> Signature de $msg$ : $\sigma = (z, c, r)$ avec $P_2$ |

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

•   US 2006155993 A

**Littérature non-brevet citée dans la description**

•   Wallet databases with observers. **T. PEDERSEN.** Proceedings of EUROCRYPT'92, Lecture Notes in Computer Science. Springer-Verlag, vol. 740, 89-105